Europäisches Patentamt

European Patent Office

Office européen des brevets

(19)

(11) Veröffentlichungsnummer : **0 368 151 B1**

# (12) EUROPÄISCHE PATENTSCHRIFT

(45) Veröffentlichungstag der Patentschrift :
**16.08.95 Patentblatt 95/33**

(51) Int. Cl.⁶ : **G06T 7/20, H04N 7/24, H04N 7/30**

(21) Anmeldenummer : **89120329.1**

(22) Anmeldetag : **03.11.89**

(54) **Verfahren zur Bestimmung von Suchpositionen zur Bewegungsschätzung.**

(30) Priorität : **05.11.88 DE 3837590**

(43) Veröffentlichungstag der Anmeldung :
**16.05.90 Patentblatt 90/20**

(45) Bekanntmachung des Hinweises auf die
Patenterteilung :
**16.08.95 Patentblatt 95/33**

(84) Benannte Vertragsstaaten :
**DE FR GB IT NL**

(56) Entgegenhaltungen :
PROCEEDINGS OF EUSIPCO-88 FOURTH EU-
ROPEAN SIGNAL PROCESSING CONFEREN-
CE,GRENOBLE,FRANCE;SIGNAL
PROCESSING IV: THEORIES AND APPLICA-
TIONS September 1988, Grenoble, FR; Seiten
1613 - 1616; PO-CHIANG LU et al.: 'Efficient
Motion Estimation for Image Prediction Coding '

(56) Entgegenhaltungen :
PROCEEDINGS OF THE INTERNATIONAL
CONFERENCE ON COMMUNICATIONS '86,
Toronto,Canada,Juni 22-25,1986;IEEE ,New
York Seiten 1878 - 1882; H.F. SUN et al.:
'Frame adaptive vector quantization '
IEEE TRANSACTIONS ON MEDICAL IMA-
GING. Bd. 7, Nr. 2, Juni 1988, New York,US;Sei-
ten 118 - 126; HUIFANG SUN et al.:
'Radiographic image sequence coding using
two-stage adaptive vector quantization '
PROCEEDINGS OF THE IEEE. Bd. 73, Nr. 4,
April 1985, New York,US;Seiten 523 - 548;
HANS-GEORG MUSMANN et al.: 'Advances in
picture coding '

(73) Patentinhaber : **ANT Nachrichtentechnik
GmbH**
**Gerberstrasse 33**
**D-71522 Backnang (DE)**

(72) Erfinder : **Gilge, Michael, Dipl.-Ing.**
**Mariahilfstrasse 18**
**D-5100 Aachen (DE)**

EP 0 368 151 B1

## Beschreibung

Die Erfindung betrifft ein Verfahren gemäß dem Oberbegriff des Patentanspruches 1. Aus EP-A1- 236 519 ist es bekannt, Bewegungsvektoren für Teilbildbereiche in zeitlich aufeinanderfolgenden Bildern einer Bildsequenz zu ermitteln, indem bezüglich zweier Bilder jeweils die Abweichung von der Position des unverschobenen Teilbildbereiches zur tatsächlichen Position des Teilbildbereiches in einem zeitlich folgenden Bild ermittelt wird, sogenanntes Block-Matching.

Im folgenden wird zunächst ein Überblick über die möglichen Verfahren zur Bewegungsschätzung, also zur Ermittlung von Bewegungsvektoren, welche Teilbildbereichen zugeordnet werden, gegeben. Dabei werden nur sogenannte "matching"-Schätzverfahren für die Bewegungsinformation untersucht, da diese im Vergleich zu anderen Verfahren einen geringeren Implementierungsaufwand erfordern. Die "matching"-Verfahren führen eine Kreuzkorrelation zeitlich aufeinanderfolgender Bilder durch, um die Bewegungsvektoren zu bestimmen die den Teilbildbereichen zugeordnet sind.

Zur Ermittlung der Bewegungsvektoren wird das Bild zunächst in Teilbildbereiche, meist quadratische Blöcke der Größe 8x8 oder 16x16 Bildpunkte, unterteilt. Die Kreuzkorrelation von Teilbildbereichen zeitlich aufeinanderfolgender Bilder der Sequenz wird durch die Berechnung eines Fehlerkriteriums E approximiert. Übliche Kriterien sind zum einen der mittlere quadratische Fehler (MQF):

$$E_{MQF} = \frac{1}{M} \sum_{i=1}^{M} (A_i - B_i)^2$$

oder die mittlere absolute Differenz (MAD):

$$E_{MAD} = \frac{1}{M} \sum_{i=1}^{M} |A_i - B_i|$$

wobei $A_i$ und $B_i$ die Bildpunktamplituden der beiden Teilbildbereiche sind und M die Zahl der Bildpunkte innerhalb der beiden gleichgroßen Teilbildbereiche. Die Berechnung des Fehlerkriteriums wird nun mehrfach durchgeführt. Dabei wird für jede einzelne Berechnung des Fehlerkriteriums die Lage der Teilbildbereiche zueinander verändert. Dies geschieht zum Beispiel dadurch, daß der Teilbildbereich A des aktuellen Bildes der sich an einer bestimmten Position innerhalb des Bildes befindet mit verschiedenen Teilbildbereichen B des vorhergehenden Bildes kombiniert wird, die sich durch jeweils unterschiedliche Positionen innerhalb des vorangegangenen Bildes auszeichnen. Für jede dieser Kombinationen wird das Fehlerkriterium berechnet und anschließend das minimale Fehlerkriterium bestimmt. Die Position des Teilbildbereiches B innerhalb des vorangegangenen Bildes, die zu diesem minimalen Fehler geführt hat, wird dem Empfänger durch Übertragung eines Bewegungsvektors mitgeteilt, der die Differenz der Position des Teilbildbereiches A des aktuellen Bildes zu der Position des Teilbildbereiches B des vorangegangenen Bildes, welches ein minimales Fehlerkriterium ergab, ausdrückt.

Jede Position des Teilbildbereiches B relativ zur Position des Teilbildbereiches A wird Suchposition genannt und entsteht durch Verschiebung der Teilbildbereiche gegeneinander. Um den bestgeeigneten Bewegungsvektor mit minimalem Fehlermaß zu erhalten, müßten theoretisch alle möglichen Positionen durch Berechnung des Fehlerkriteriums überprüft werden.

Aufgabe der Erfindung ist es ausgehend vom Oberbegriff des Patentanspruchs 1 ein Verfahren anzugeben, welches zu Bewegungsvektoren mit geringem Fehlermaß mit begrenztem Suchaufwand führt. Diese Aufgabe wird durch die Merkmale des Patentanspruchs 1 gelöst. Die abhängigen Ansprüche zeigen Weiterbildungen dieses Verfahrens auf.

Das Verfahren nach der Erfindung gewährleistet eine zuverlässige Bildrekonstruktion, auch für schnelle Suchalgorithmen. Der Hardwareaufwand für die Aufbereitung des Übertragungssignals ist geringer als bei den meisten bekannten Verfahren zur Bilddatenreduktion.

Beim Verfahren nach der Erfindung wird mit einer möglichst geringen Anzahl von Suchpositionen gearbeitet und trotzdem wird der gleiche Bewegungsvektor erhalten, der sich bei einer vollständigen Durchmusterung aller Suchpositionen ergeben hätte.

Anhand der Zeichnungen wird die Erfindung nun näher erläutert. Zuvor werden jedoch einige aus der Literatur bekannte Suchverfahren vorgestellt, um die Unterschiede der Erfindung bezüglich dieser Verfahren besser zu verdeutlichen.

Es zeigen:

Bild 1 den Verlauf des Fehlerkriteriums über der Verschiebung im gesamten Suchbereich,

Bild 2 Suchschritte beim "2D Logarithmic" Verfahren für einen Verschiebungsvektor (2,6) mit einer Schrittzahl 5,

Bild 3 Suchschritte beim "Three Step" Verfahren und Verschiebungsvektor (2,6),

Bild 4 Suchschritte beim "Conjugate Direction" Verfahren für einen Verschiebungsvektor (2,6) mit einer Schrittzahl 9,

Bild 5 Suchpositionen für eine modifizierte volle Suche,

Bild 6 das Prinzip einer hierarchischen Suche am Beispiel eines Bewegungsvektors:

1. Stufe: modifizierte volle Suche mit 1 bzw. 2pel Auflösung;

2. Stufe: volle Suche mit eingeschränktem Suchbereich und 0,5pel Auflösung,

Bild 7 den Leistungsfaktor mit Pel Genauigkeit für verschiedene Suchverfahren,

Bild 8 den Leistungsfaktor mit Halb-Pel Genauigkeit für verschiedene Suchverfahren,

Bild 9 den mittleren Rechenaufwand für verschiedene Suchverfahren bei Pel-Genauigkeit,

Bild 10 den mittleren Rechenaufwand für verschiedene Suchverfahren bei Halb-Pel-Genauigkeit,

Bild 11 das Prinzip der dynamischen Vektorquantisierung,

Bild 12 die Struktur der dynamischen Vektorquantisierung,

Bild 13 die Einteilung des Suchbereichs nach der modifizierten vollen Suche,

Bild 14 eine mögliche Einteilung des Suchbereichs nach dynamischer Vektorquantisierung,

Bild 15 ein Flußdiagramm für das Update-Verfahren,

Bild 16 das Prinzip des Splitting-Verfahrens,

Bild 17 ein Flußdiagramm für das Splitting-Verfahren,

Bild 18 ein Vektorbuch erzeugt nach dem Update-Verfahren,

Bild 19 ein Vektorbuch mit einer geringeren Anzahl von Bewegungsvektoren,

Bild 20 den Leistungsfaktor für die dynamische Vektorquantisierung und die modifizierte volle Suche bei Pel-Genauigkeit und

Bild 21 den Leistungsfaktor für die dynamische Vektorquantisierung und die modifizierte volle Suche bei Halb-Pel-Genauigkeit.

Bei der Erfindung werden die einzelnen Bilder der Sequenz in gleichgroße Teilbildbereiche - Bildblöcke - $b_i$ unterteilt. Solche Teilbildbereiche sind meist rechteckige Bildausschnitte (Bildblöcke). Jeder einem Bewegungsschätzer zugeführte Bildblock eines aktuellen Bildes wird mit einer Anzahl gleichgroßer Bildblöcke an verschiedenen Positionen im vorangegangenen Bild verglichen. Jedem Eingangsbildblock $b_i$ wird ein Bewegungsvektor $v_i$ derart zugeordnet, daß der Bewegungsvektor die relative Position des Eingangsbildblockes $b_i$ zu demjenigen Bildblock des vorangegangenen Bildes angibt, der die größte Ähnlichkeit mit dem Eingangsbildblock aufweist. Zur Feststellung der Ähnlichkeit wird ein Fehlerkriterium E benutzt, welches beispielsweise durch die Summe der absoluten Differenzen der Bildpunkte beider Bildblöcke gebildet wird. Die größte Ähnlichkeit wird durch Auffinden des Minimums des Fehlerkriteriums festgestellt, welches für jede Verschiebung der Position des Bildblockes des vorangegangenen Bildes relativ zu der Position des gleichgroßen Bildblockes $b_i$ des aktuellen Bildes berechnet wird. Aus der unendlichen Anzahl möglicher Verschiebungen v der beiden Bildblöcke gegeneinander wird nur eine endliche Anzahl von Verschiebungen v ausgewählt, die im folgenden als Suchpositionen bezeichnet werden. Für jede dieser Suchpositionen wird das Fehlerkriterium E berechnet. Dem Eingangsbildblock $b_i$ wird als Bewegungsvektor $v_i$ jene Verschiebung zugeordnet, welche die größte Ähnlichkeit der beiden Bildblöcke, ausgedrückt durch das absolute Minimum des Fehlerkriteriums, ergibt. Die Auswahl der Suchpositionen aus der unendlichen Menge aller Suchpositionen wird dabei derart vorgenommen, daß der als Ergebnis der Minimumsuche des Fehlerkriteriums über der endlichen Anzahl von Suchpositionen erhaltene Bewegungsvektor $v_i$ möglichst exakt mit dem Ergebnis einer theoretischen Minimumsuche des Fehlerkriteriums über der unendlichen Anzahl aller möglichen Suchpositionen übereinstimmt. Entsprechend der Anzahl der ausgewählten Suchpositionen ist damit eine Einsparung an Rechenschritten zur Ermittlung eines Bewegungsvektors zu erreichen, ohne das Ergebnis wesentlich zu beeinflussen und damit die Wirksamkeit des Verfahrens zur Bewegungskompensation bei der Anwendung im Rahmen eines Hybrid-Codecs zu gefährden.

Obige Schritte werden nun ausführlicher erläutert und mit bekannten Verfahren verglichen.

Eine Begrenzung der Anzahl der Suchpositionen ergibt sich zunächst aus der Festlegung eines Suchbereiches, der die maximale Verschiebung der Teilbildbereiche gegeneinander begrenzt. Dadurch brauchen nur noch Suchpositionen innerhalb des Suchbereiches von beispielsweise ±6 Bildpunkten in horizontaler und vertikaler Richtung überprüft zu werden. Diese Beschränkung ergibt sich aus der maximalen Geschwindigkeit von in der Bildsequenz festgehaltenen Bewegungen und der Anzahl der Bilder der Sequenz pro Sekunde.

Eine weitere Verringerung der im Prinzip immer noch unendlich vielen Suchpositionen innerhalb des Suchgebietes erhält man durch Einführung einer Genauigkeit. So kann es beispielsweise ausreichen, nur Verschiebungen zu betrachten, die einen minimalen örtlichen Unterschied von einem Bildpunktabstand aufweisen. In diesem Zusammenhang spricht man auch von "Pel" - der Genauigkeit und die maximale Anzahl von möglichen Suchpositionen entspricht der Anzahl der Bildpunkte innerhalb des eingeführten Suchbereiches. Nun kann die "wahre" Bewegung jedoch beliebig zwischen den Bildpunkten liegen. Daher müssen zur Erzielung einer besseren Genauigkeit sogenannte "Sub-Pel" Bewegungsvektoren, auch Suchpositionen überprüft werden, die zwischen den Rasterpunkten der Bildpunkte liegen, wozu eine Interpolation der Bildpunkte erforderlich ist. So erhöht sich beispielsweise die maximale Anzahl von Suchpositionen bei geforderter Halb-Pel-Genauigkeit um den Faktor vier gegenüber Pel-Genauigkeit.

Im folgenden werden zunächst die wichtigsten Block-matching-Verfahren aus der Literatur (Proceedings of the IEEE, Vol.73, No.4, April 1985, Seiten 523-548, "Advances in Picture Coding") beschrieben und verglichen. Die Algorithmen unterscheiden sich durch die Anzahl und Lage der Suchpositionen an denen das Fehlerkriterium berechnet wird.

1. Volle Suche: Werden ausnahmslos alle Suchpositionen hinsichtlich des Fehlerkriteriums überprüft, spricht man von einer vollen Suche. Diese Methode liefert selbstverständlich die genauesten Verschiebungsvektoren, aber erfordert auch den meisten Rechenaufwand, weil alle möglichen Verschiebungen der Teilbildbereiche (Blöcke) untersucht werden müssen. Also wenn z.B. ein Suchgebiet von ± 11 Bildpunkten verwendet wird, sind 529 Berechnungen des Fehlerkriteriums pro Block erforderlich. Das bedeutet auch, daß 529 verschiedene Bewegungsvektorzustände existieren. Das hat nicht nur einen hohen Rechenaufwand zur Folge, sondern es führt auch zu einem langen Code für die Darstellung der Bewegungsvektoren, der zum Empfänger übertragen werden muß.

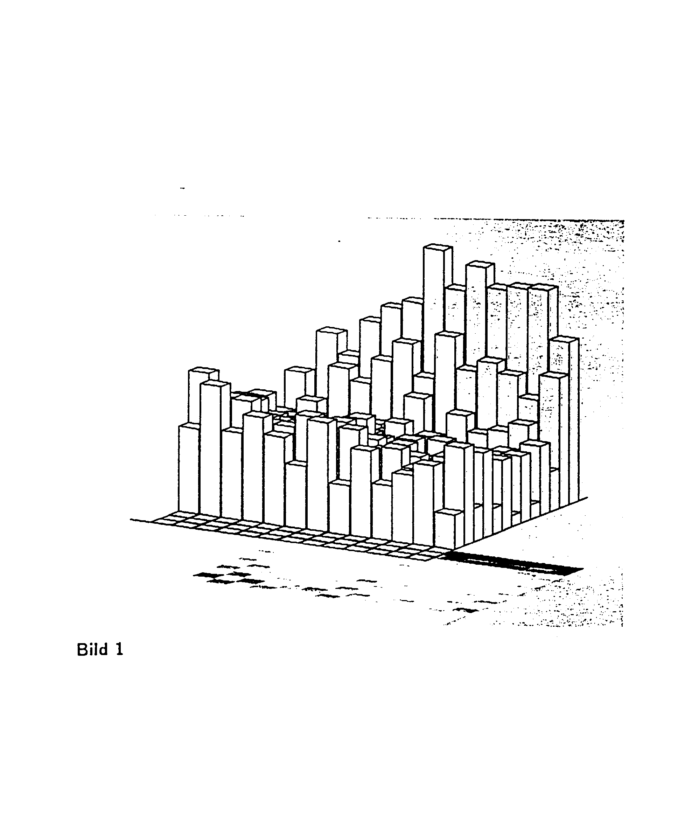

2. Schnelle Suche: Um den großen Rechenaufwand der vollen Suche zu reduzieren, sind mehrere schnelle Suchverfahren aus der Literatur bekannt. Ein monotones Verhalten des Fehlerkriteriums ist die Grundlage aller dieser schnellen Algorithmen. Ein Fehlermodell geht davon aus, daß der Fehler (MAD oder MQF) in jeder Richtung von der Position der wahren Verschiebung monoton ansteigt. Aber das Fehlersignal kann auch lokale Minima aufweisen, deshalb werden die schnellen Suchverfahren nicht immer die besten Verschiebungsvektoren finden. Der reale Verlauf des Fehlerkriteriums über allen Suchpositionen (volle Suche) ist in Bild 1 dargestellt.

Zunächst werden drei aus der Literatur bekannte "schnelle" Verfahren vorgestellt:

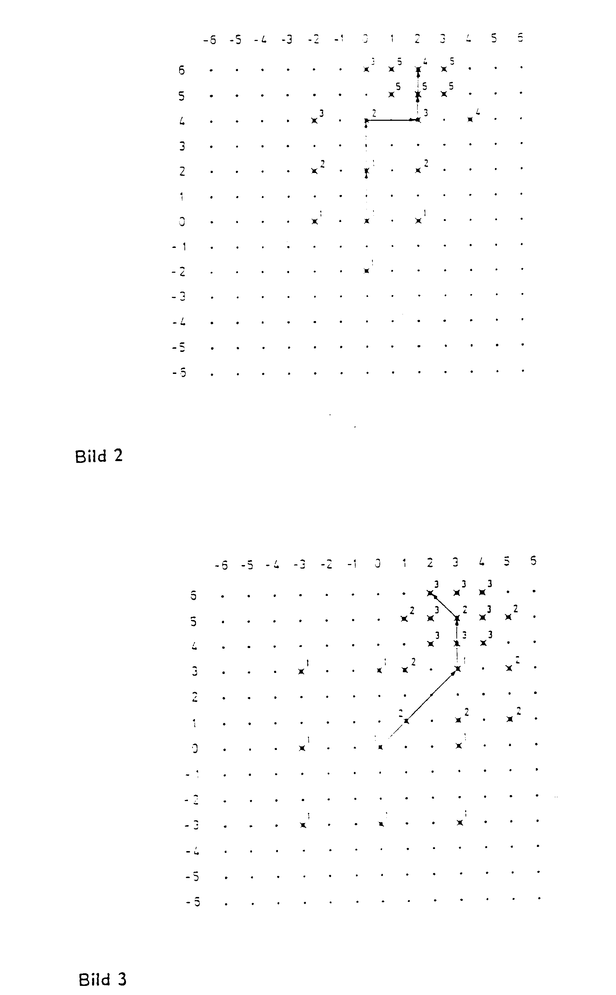

2D-Logarithmic Suchverfahren: Beim logarithmischen Suchverfahren werden Suchschritte mit abnehmender Schrittweite benutzt. Die Suche beginnt bei der Position (0,0). Alle vier umliegenden Punkte, mit einem Abstand gleich der Schrittweite, werden auf minimale Fehler untersucht. Der Punkt mit dem geringsten Fehler gilt jetzt als Startpunkt für die weitere Suche. Wenn keine weitere Verbesserung erzielt werden kann oder wenn der Rand des Suchgebietes erreicht worden ist, wird die Schrittweite verkleinert. Dasselbe Verfahren wird wiederholt, aber jetzt mit kleinerem Abstand zu den umliegenden Punkten. Die Anzahl von Berechnungen, die hier durchgeführt werden müssen, ist von der Größe des Suchgebietes und dem Bildmaterial abhängig. Bild 2 zeigt das 2D-Logarithmic-Verfahren an einem Beispiel. In der ersten Stufe beträgt die Schrittweite 2 Pixel, und in der zweiten Stufe 1 Pixel. Der Suchbereich weist in diesem Fall eine maximale Verschiebung von ± 6 Bildpunkten in jeder Richtung auf. Der gefundene Bewegungsvektor beträgt im Beispiel (2,6).

Three-Step Verfahren: Dieses Verfahren benutzt nur drei Suchschritte zur Ermittlung des Bewegungsvektors. Die Anzahl der umliegenden Suchpositionen ist konstant gleich 8 und also nicht datenabhängig wie beim 2D-Logarithmic Verfahren. Die Schrittweite wird nach jedem Suchschritt verkleinert und die Suche wird an der vorher gefundenen Suchposition neu gestartet, Bild 3. Wenn man große Suchgebiete verwendet, werden die Suchschritte oft zu groß, um die kleineren Bewegungen zuverlässig schätzen zu können. Eine maximale Verschiebung von ± 6 Bildpunkten und mit den Schrittweiten 3, 2, und 1 Pixel liefern in diesem Beispiel den Vektor (2,6).

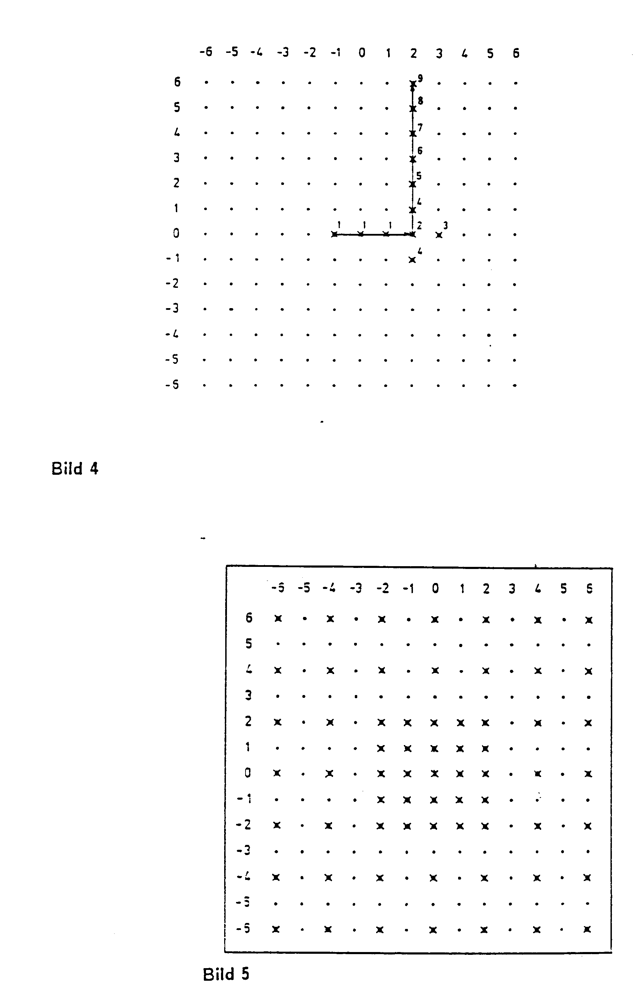

Conjugate Direction Verfahren: Dieses Suchverfahren findet erst das Fehlerminimum in horizontaler Richtung und ausgehend von diesem Punkt wird das Fehlerminimum in vertikaler Richtung gesucht. Die Anzahl der Berechnungen, die zur Bestimmung der Bewegungsvektoren in einem Block benötigt werden, ist von der Größe des Suchgebietes abhängig. In Bild 4 wird ein Beispiel gezeigt.

Die bisherigen Verfahren benutzen zur wirksamen Bestimmung von Bewegungsvektoren Annahmen über das Verhalten des Fehlerkriteriums in Abhängigkeit von der Suchposition. Speziell wird ein monotones Ansteigen des Fehlers mit größerer Entfernung von der "wahren" Suchposition (trichterförmiges Fehlergebirge) gefordert. Bild 1 zeigt demgegenüber einen typischen realen Fehlerverlauf, der die Nichterfüllbarkeit der Forderung deutlich macht. Das Verfahren nach der Erfindung zeichnet sich gegenüber den vorgestellten Verfahren dadurch aus, daß keine Annahmen über den Fehlerverlauf getroffen werden und dennoch eine "schnelle" Operation mit gegenüber einer vollen Suche stark verringertem Rechenaufwand erreicht wird.

Verringert man ausgehend von der vollen Suche die Anzahl der Suchpositionen, reduziert sich der Rechenaufwand in gleichem Maße. Wird diese Reduktion in einer dem menschlichen visuellen System angepaßten Art und Weise durchgeführt, können mit der vollen Suche vergleichbare Ergebnisse erzielt werden. Das menschliche visuelle System kann nämlich schnelle Bewegungen nur ungenau auflösen, schnelle Bewegungen äußern sich aber in großen Vektoren. In kleinerer Umgebung der Nullposition (beide Teilbildbereiche sind in Deckung) wird jede Suchposition untersucht, aber wenn der Abstand von der Position (0,0) größer wird, kann ein groberes Raster verwendet werden. Im folgenden wird beispielhaft im kleineren Suchgebiet um die Nullposition jeder Punkt innerhalb eines Suchgebietes (± 3 Pixel) untersucht. Außerhalb dieses Bereiches wird die Auflösung halbiert und nur jede zweite Suchposition alle zwei Zeilen untersucht, Bild 5.

Während die volle Suche für eine maximale Verschiebung von ± 11 Punkten 529 Berechnungen erforderte, sind bei diesem, als modifizierte volle Suche bezeichneten Verfahren nur 177 Berechnungen nötig, d.h. ein Reduktionsfaktor von 3 ist erzielt worden.

Oft ist eine Auflösung von 1 Pixel für die Bewegungsvektoren nicht ausreichend, deshalb wird Sub-Pel-Genauigkeit eingeführt. Wenn man sowohl Bildqualität als auch Komplexität und Rechenaufwand berücksichtigt, ist die Verbesserung, die man mit einer Auslösung unterhalb von 0,5 Pel erreichen kann, zu gering, um den größeren Aufwand zu rechtfertigen. Daher ist Halb-Pel-Genauigkeit der Bewegungsvektoren in vielen Fällen anzustreben. Für die volle Suche bedeutet Halb-Pel-Genauigkeit der Bewegungsvektoren einen erheblich höheren Rechenaufwand. Anstatt 529 Berechnungen pro Block müssen jetzt 2025 Berechnungen durchgeführt werden.

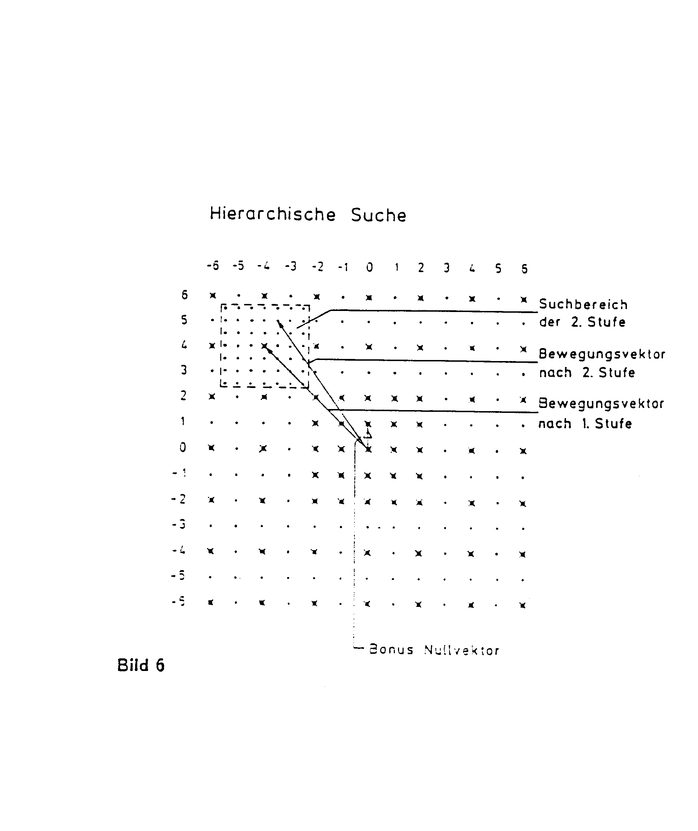

Durch Verwendung einer hierarchischen Struktur kann die modifizierte volle Suche auf Halb-Pel-Genauigkeit erweitert werden, ohne die Anzahl der Suchpositionen gegenüber dem einstufigen Verfahren wesentlich zu erhöhen. Dazu wird in der ersten Stufe eine modifizierte volle Suche mit Pel-Genauigkeit durchgeführt. In der zweiten Stufe wird ein Halb-Pel-Suchbereich von beispielsweise ± 3 Pixeln um das vorher gefundene Fehlerminimum benutzt. Die hierarchische, modifizierte volle Suche ist in Bild 6 dargestellt. Eine maximale Verschiebung von ± 6 Pixel wird beispielhaft im Bild 6 verwendet, und in der zweiten Stufe wird ein eingeschränktes Suchgebiet und 0,5 Pel Auflösung benutzt. Für eine Bewegungsschätzung mit maximaler Verschiebung von ± 11 müssen jetzt 177 + 7·7 = 226 Fehlerberechnungen durchgeführt werden. Im Vergleich zu der vollen Suche mit Halb-Pel-Genauigkeit ist hier ein Reduktionsfaktor um mehr als 9 erzielt worden. Nun muß noch gezeigt werden, daß das Verfahren gemäß der Erfindung in der Lage ist, eine Bewegungsschätzung mit hinreichender Genauigkeit auszuführen. Da das Ziel der Bewegungsschätzung im Rahmen eines hybriden Codierverfahrens in der Kompensation der Bewegung der Bildsequenz besteht, kann ein Kriterium für die Güte der Bewegungsschätzung über das Verhältnis der Leistung des Restfehlersignals vor und nach der Bewegungskompensation eingeführt werden. Damit erhält man ein Leistungsmaß, das Schätzverfahren auf die Fähigkeit, die Restfehlerleistung zu minimieren, untersucht. Als Leistungskriterium wird die folgende Formel benutzt.

$$P_{N+3} = \frac{\sum_{i=1}^{M}(Orgblock_{N+3}(i) - Kompblock_N(i))^2}{\sum_{i=1}^{M}(Orgblock_{N+3}(i) - Orgblock_N(i))^2}$$

Dabei bezeichnet $Orgblock_{N+3}$ einen originalen Teilbildbereich aus dem Videobild N + 3 und $Kompblock_N$ den entsprechend der ermittelten Bewegungsinformation verschobenen Teilbildbereich des vorangegangenen Videobildes N. Für eine perfekte Kompensation der Bewegung resultiert also ein Wert P = 0, während ein Leistungsmaß von P = 1 bedeutet, daß keine Verbesserung durch die Bewegungskompensation erreicht worden ist. Bei P = 0,2 wurde die Restfehlerleistung um 80 % reduziert. Eine Bildsequenz, die einen hohen Anteil translatorischer Bewegung aufweist, hat typischerweise einen geringen Leistungskoeffizienten zur Folge.

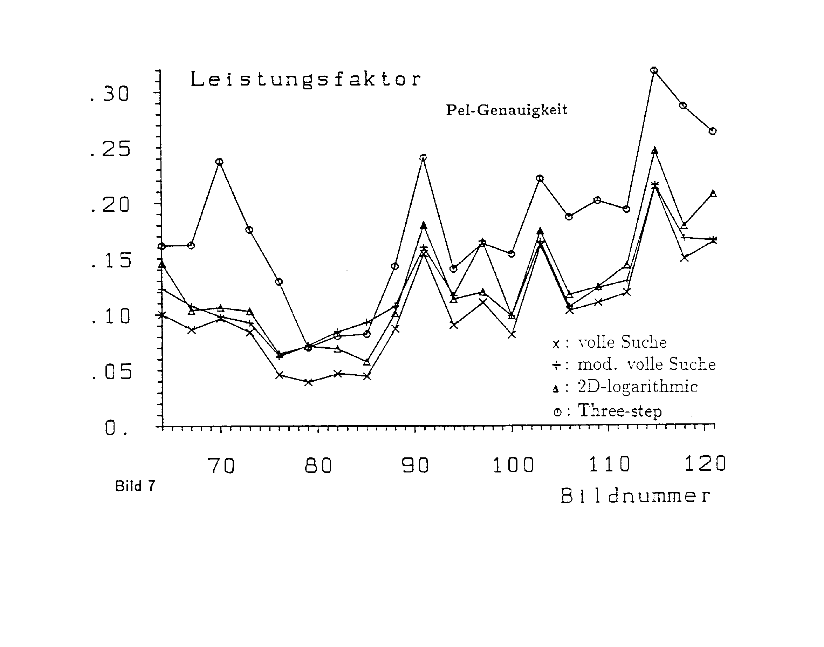

In Bild 7 wurde das Leistungsmaß für die oben vorgestellten schnellen Suchverfahren anhand einer Testbildsequenz und für Pel-Genauigkeit der Bewegungsvektoren ermittelt und mit dem Ergebnis der vollen Suche verglichen. Das erfindungsgemäße Verfahren konnte dabei in vielen Fällen die Leistung der vollen Suche erreichen, während speziell das Three-Step Verfahren keine adäquaten Ergebnisse liefert. Das Conjugate-Direction Verfahren wurde wegen der völlig unzureichenden Resultate nicht in diesen und den folgenden Vergleich einbezogen.

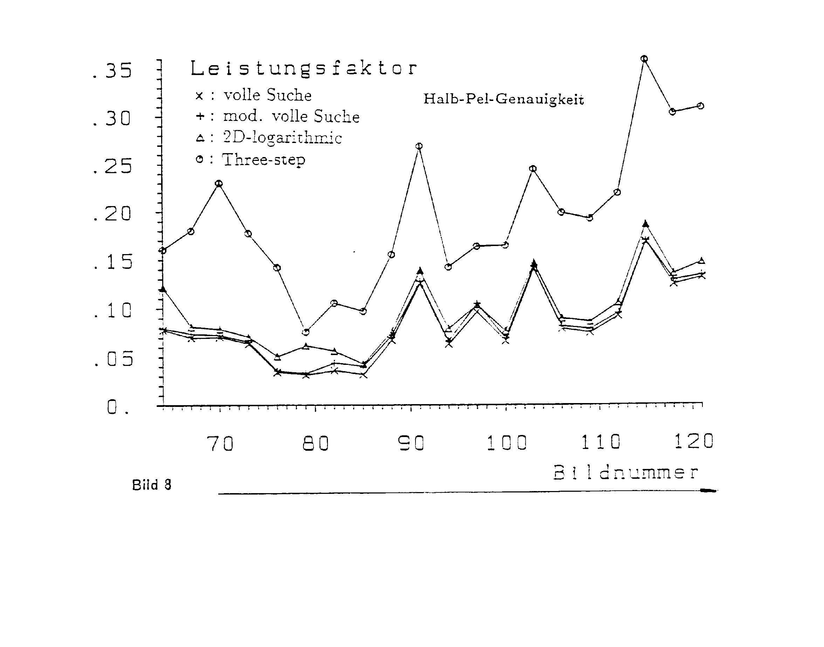

Für Halb-Pel-Genauigkeit ist das Ergebnis in Bild 8 dargestellt. Das Three-Step Verfahren weist auch in diesem Fall schlechtere Ergebnisse als die drei anderen Verfahren auf. Der Unterschied zwischen der vollen Suche und hierarchischer, modifizierter voller Suche ist erheblich kleiner geworden, und ist in den meisten Fällen verschwindend gering. Die Differenz der Leistungsfaktoren der 2D-Logarithmic Suche und der modifizierten vollen Suche ist hingegen jetzt größer geworden. Das Verfahren der hierarchischen, modifizierten vollen Suche könnte man als schnelle volle Suche bezeichnen.

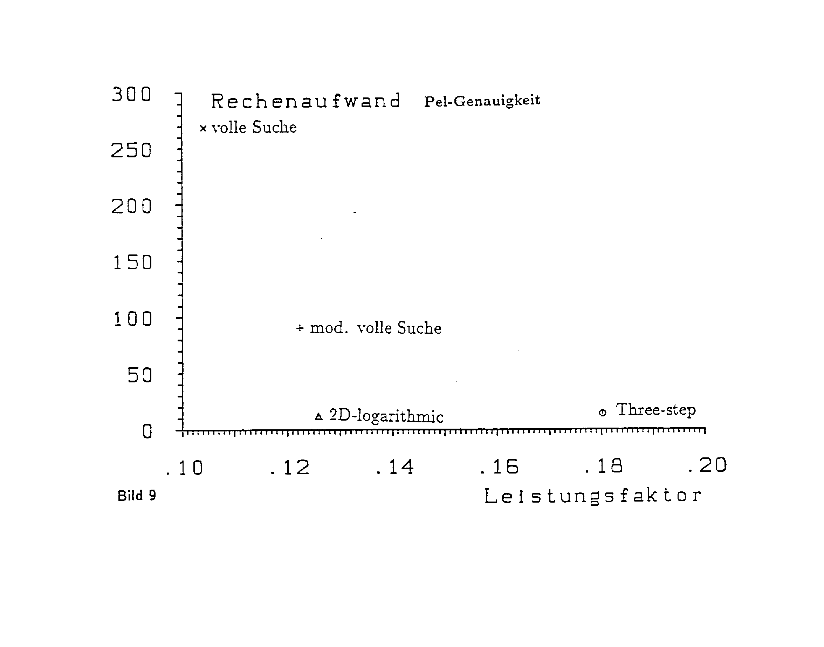

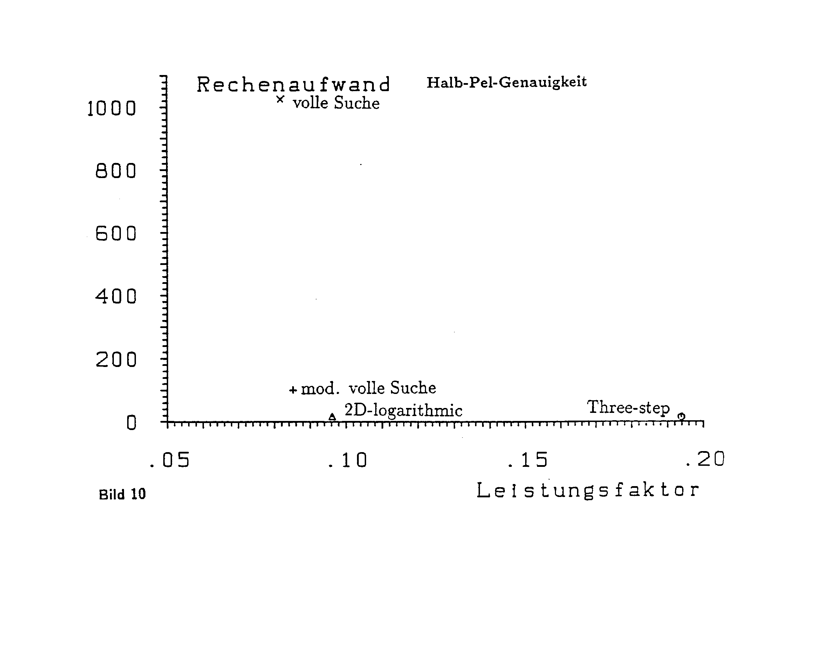

Die Methoden wurden auch im Hinblick auf den Rechenaufwand verglichen. Ein gutes Verfahren wird sowohl einen kleinen Rechenaufwand als auch einen geringen Leistungsfaktor aufweisen. Der Rechenaufwand für ein Bild ist hier als die mittlere Zahl der Suchpositionen pro Block definiert. Die mittlere Anzahl Suchpositionen pro Bild kann dann durch Multiplikation mit der Zahl der Blöcke pro Bild (396) berechnet werden. In Bild 9 und Bild 10 sind die verschiedenen Methoden in Bezug auf mittleren Rechenaufwand und mittlere Leistung für die aus 20 Bildern bestehende Testsequenz verglichen. Während für Pel-Genauigkeit die Verbesserung des Leistungsfaktors gegenüber dem 2D-Logarithmic Verfahren durch relativ hohen Rechenaufwand erkauft werden muß, der im Vergleich zur vollen Suche jedoch immer noch gering ist, erkennt man, daß für Halb-Pel-Suche die modifizierte volle Suche das kompromißlos beste Verfahren in Bezug auf Leistungsfaktor und Rechenaufwand ist.

Die Suchpositionen wurden bislang empirisch ermittelt. Erfindungsgemäß werden nun zwei Methoden beschrieben, die es ermöglichen eine optimale Auswahl der Suchpositionen aus der Gesamtzahl aller möglichen Suchpositionen in Bezug auf eine vorgegebene Anzahl oder ein Fehlermaß zu bestimmen. Die dabei verwendete Methode entspricht dem aus der Bildcodierung bekannten Verfahren der Vektorquantisierung (Esprit '86, Results and Achievements, Commission of the European Communities, Directorate General XIII, Telecommunications, Information, Industries & Innovation, Elsevier Science Publ., North Holland, 1987, Seiten 419 bis 420). Daher werden im folgenden die Begriffe der Vektorquantisierung verwendet: Die ausgewählten Suchpositionen werden in einem sogenannten Vektorbuch festgehalten. Die Vektorquantisierung wird im folgenden dynamisch genannt, weil der Vergleich der Teilbildbereiche des aktuellen Bildes nicht wie bei der normalen Vektorquantisierung mit einem festen Satz von Musterteilbildbereichen erfolgt, sondern zum Vergleich die Teilbildbereiche des vorangegangenen Bildes als Musterteilbildbereiche verwendet werden und diese sich ja mit der Bildsequenz dynamisch ändern.

Eine gewisse Untermenge von Suchpositionen aus der Menge aller möglichen Suchpositionen wird im Verlauf des Verfahrens durch eine einzige sogenannte Ersatzsuchposition ersetzt. Dieses Verfahren kann erfindungsgemäß auch adaptiv während des Betriebes der die Suchpositionen verwendenden Bewegungsschätzeinheit erfolgen. Die Suchpositionen werden also sequenzabhängig adaptiert: Eine Sequenz mit vielen unbewegten Blöcken bewirkt eine andere Suchpositionsstruktur als eine Sequenz, in der viel Bewegung vorkommt.

Die Bewegungsschätzung kann dann in zwei Phasen eingeteilt werden.

I. Trainingsphase: Die optimalen Suchpositionen werden ermittelt. Dazu wird die Auswahl der Suchpositionen anhand von Bildsequenzen einmalig vor Aufnahme der Bildübertragung (Inbetriebnahme des Hybrid-Bildcodecs) in der Trainingsphase vorgenommen. Diese Suchpositionen finden während der Bildübertragung bei der Codierung aller Bildsequenzen Verwendung. Die Auswahl kann dabei durch Systeme oder Rechnerschritte vorgenommen werden, die nicht mit dem Bildcodec bzw. mit dem Codierverfahren übereinstimmen.

II. Schätzphase: Die Bewegungsschätzung wird mit den ermittelten Suchpositionen durchgeführt.

Die in der Trainingsphase ermittelten Suchpositionen werden während der Bildübertragung ständig verändert, um eine Adaption in Bezug auf die aktuell zu verarbeitenden Bilddaten zu erreichen. Die Suchpositionen der Trainingsphase werden durch solche Suchpositionen ersetzt, die zur Erzielung einer besseren Ähnlichkeit zwischen aufeinanderfolgenden entsprechenden Bildblöcken besser geeignet sind.

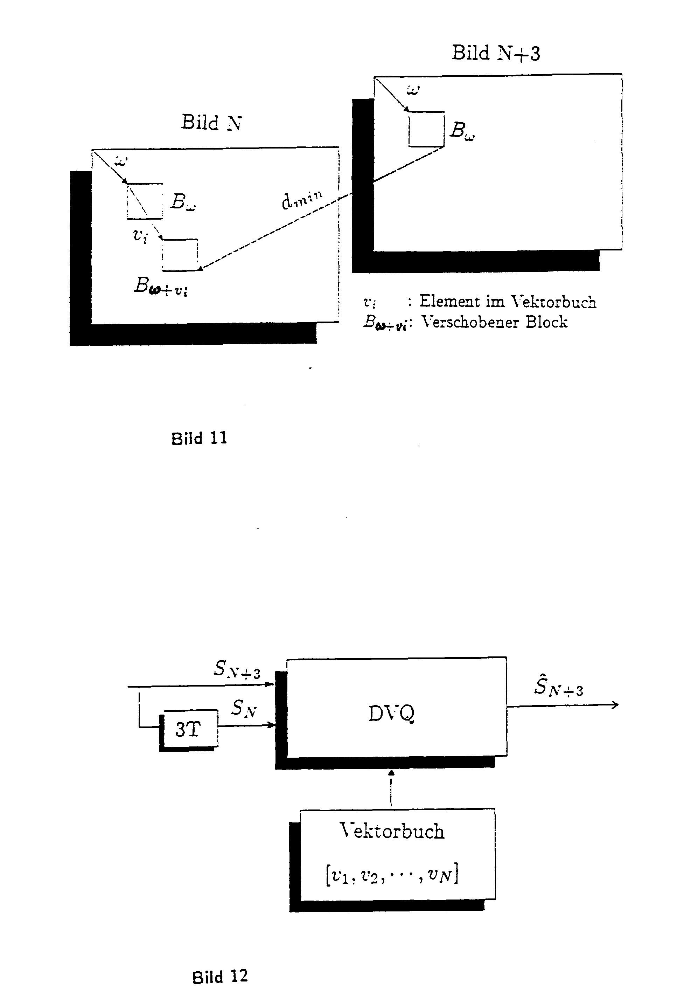

Ein dynamischer Vektorquantisierer erzeugt mit Hilfe des vorhergehenden Bildes und eines Vektorbuches ein geschätztes Bild. Jedes Bild wird in Blöcke eingeteilt. Ein bestimmter Suchbereich innerhalb der vorhergehenden Bildes kann als Codebuch (die möglichen Ausgangswerte) betrachtet werden. Weil sich dieses Codebuch ständig ändert, wird die Vektorquantisierungsmethode als dynamisch bezeichnet. Die Blöcke werden mit Hilfe der Vektoren im Vektorbuch in das vorhergehende Bild abgebildet. Bild 11 zeigt das Prinzip der dynamischen Vektorquantisierung. Der Block $B_\omega$ in Bild N+3 wird in Bild N abgebildet. Der Parameter $\omega$ bezeichnet die Lage des aktuellen Blocks im Bild. Der Block $B_\omega$ im Bild N+3 wird mit den verschobenen Blöcken im Bild N verglichen und der Block $B_{\omega+v_i}$, der den kleinsten Fehler aufweisen kann, ist der geschätzte Block. Die Abbildung ist nur innerhalb eines begrenzten Gebietes möglich. Die Größe des Suchgebietes ist vorher festgelegt, hier soll die maximale Verschiebung beispielsweise $\pm 11$ Bildpunkte betragen. Das Vektorbuch V enthält die Suchpositionen, die für die Abbildung verwendet werden. Bild 12 zeigt die Struktur der dynamischen Vektorquantisierung. Das geschätzte Bild $\hat{S}$ wird aus zwei Originalbildern $S_N$ und $S_{N+3}$ mit Hilfe des Vektorbuches $[v_1, v_2, ..., v_M]$ durch einen dynamischen Vektorquantisierer DVQ erzeugt.

Ein Vektorquantisierer erreicht durch eine mehrdimensionale Quantisierung statistisch verbundener Variablen eine effektivere Repräsentation in Bezug auf den Quantisierungsfehler, als dies bei skalarer Quantisierung möglich wäre. Da Bewegungsvektoren betrachtet werden, ist die Vektordimension zwei. Das Ziel des Vektorquantisierers ist es, die Datenmenge zu reduzieren und gleichzeitig einen minimalen Quantisierungsfehler zu erreichen. Ein Vektorquantisierer ist optimal, wenn die mittlere Verzerrung zwischen den Eingangsvektoren $\vec{x}$ und den quantisierten Vektoren $E[d(\vec{x}, VQ(\vec{x}))]$ minimal ist. $VQ(\cdot)$ ist hier das Symbol für den Vektorquantisierer. Das Fehlermaß zwischen Eingangsvektoren und den quantisierten Vektoren wird hier durch $d(\cdot)$ repräsentiert. Alle Ausgangsvektoren $\vec{y}$ die von dem Vektorquantisierungssystem erzeugt werden können, sind in einem sogenannten Vektorbuch V enthalten.

V: alle $\vec{y}$ mit $\vec{y} = VQ(x)$

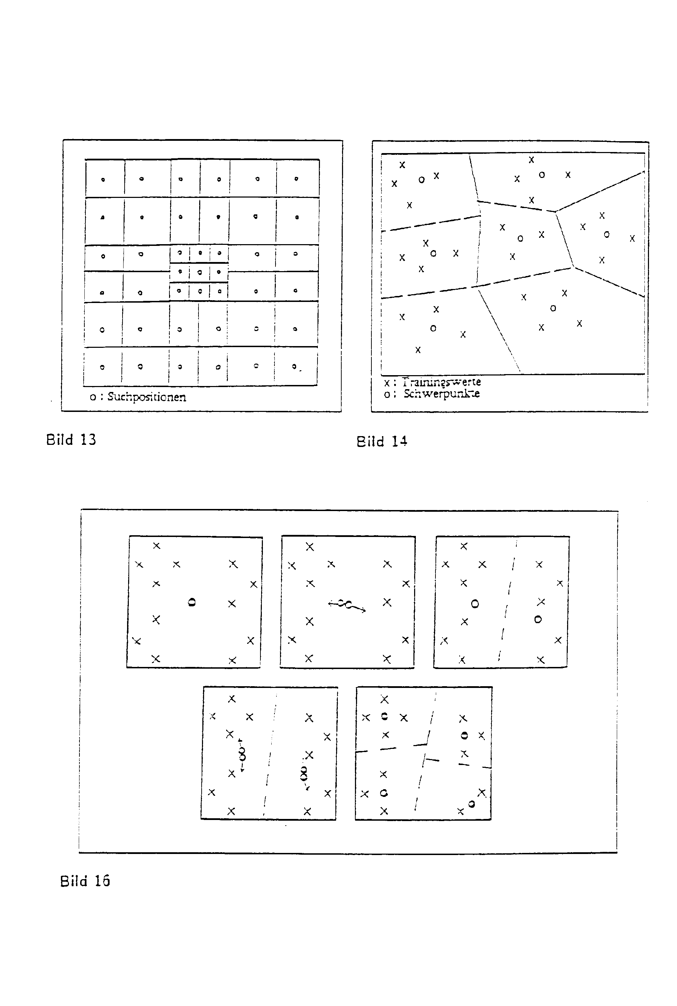

Das gesamte Suchgebiet (maximale Verschiebung $\pm$ 11 Bildpunkte) wird in Bereiche (Zellen) eingeteilt. Bei Bewegungsschätzung durch dynamische Vektorquantisierung wird der Suchbereich anders segmentiert als bei der modifizierten vollen Suche, Bild 13 und Bild 14.

Die Vektoren, die in demselben Bereich liegen, werden auf denselben Ausgangsvektor abgebildet, d.h. die Bewegungsvektoren werden quantisiert. In der Trainingsphase werden die Zellen und dadurch das Vektorbuch erzeugt. Eine durch Fehlermaßberechnungen gefundene Sammlung von Trainingsvektoren bildet eine Zelle. Ein Fehlermaß $d(\cdot)$, das einfach ist und viel benutzt wird, ist das mittlere quadratische Fehlermaß (MQF). Die Schwerpunkte der optimal eingeteilten Zellen sind dann die Suchpositionen. Mit diskreten Eingangswerten und dem mittleren quadratischen Fehlermaß könne die Schwerpunkte einer Zelle $5(A_i)$ einfach berechnet werden.

$$S(A_i) = \frac{1}{C(A_i)} \sum_{k=1}^{C(A_i)} \vec{x_k}$$

Der Parameter $C(A_i)$ ist die Anzahl der Trainingsvektoren $\vec{x_k}$ innerhalb der aktuellen Zelle $A_i$. Die Trainingswerte sind beispielsweise durch eine volle Suche erzeugt worden. Die Trainingssequenz kann prinzipiell alle möglichen Vektorpositionen innerhalb des Suchgebietes enthalten. Das Ziel der Vektorquantisierung ist es, das Restfehlerbild zu minimieren und gleichzeitig so wenig Vektorzustände oder Elemente im Vektorbuch wie möglich zu verwenden. Das Vektorbuch wird aus den Trainingsvektoren mit Hilfe einer sogenannten "Clustering"-Methode erzeugt. Diese "Clustering"-Methode teilt das gesamte Suchgebiet in optimale Bereiche ein - in Bezug auf das gewählte Fehlermaß - und liefert daraus ein Vektorbuch. Das "Clustering"-Verfahren ist ein rekursiver Algorithmus. Das Vektorbuch wird solange verbessert, bis eine vorher festgelegte Abbruchbedingung erreicht wird. Wenn das Vektorbuch erzeugt worden ist, kann es im Hybridcoder eingesetzt werden und die Bewegungsschätzung mit Hilfe der Suchpositionen im Vektorbuch kann durchgeführt werden.

Abgesehen von dem mit dem "Clustering"-Algorithmus verbundenen Rechenaufwand zur Erzeugung des Vektorbuches können genauere Bewegungsvektoren bei gleichem Rechenaufwand wie bei der modifizierten vollen Suche erzeugt werden. Die Leistung des Verfahrens ist nur von dem verwendeten Vektorbuch abhängig.

Es gibt zwei grundsätzliche Verfahren zur Erzeugung eines dynamischen Vektorbuches:

I: Man kann mit einem Initialvektorbuch mit der korrekten Größe beginnen und dann dieses Vektorbuch weiter verbessern, bis das Abbruchkriterium erfüllt ist. Dieses Verfahren wird später Methode 1 oder Update-Verfahren genannt.

II: Man kann auch mit einem kleinen Initialvektorbuch beginnen und dann rekursiv ein größeres Vektorbuch aufbauen. Wenn der Algorithmus die gewünschte Anzahl von Ersatzvektoren erzeugt hat, bricht er ab. Dieses Verfahren wird später Methode 2 oder Splitting-Verfahren genannt.

Methode 1: Bei erfindungsgemäßer Methode 1 muß zunächst ein Initialvektorbuch mit der richtigen Größe festgelegt werden. Die Wahl des Initialvektorbuches ist wichtig, weil die Ergebnisse, die man mit der dynamischen Vektorquantisierungsmethode erreichen kann, dadurch beeinflußt werden. Das Initialvektorbuch kann z.B. aus den ersten Werten der Trainingssequenz, oder auch aus Vektoren, die im Suchgebiet gleichmäßiger verteilt sind, bestehen. Die Trainingsvektoren werden durch eine volle Suche erzeugt. Die Entscheidung, einen neuen Vektor in das Vektorbuch aufzunehmen, wird durch folgende Fehlerberechnungen bestimmt.

$$MQF = (v_{xi} - u_{xj})^2 + (v_{yi} - u_{yj})^2$$

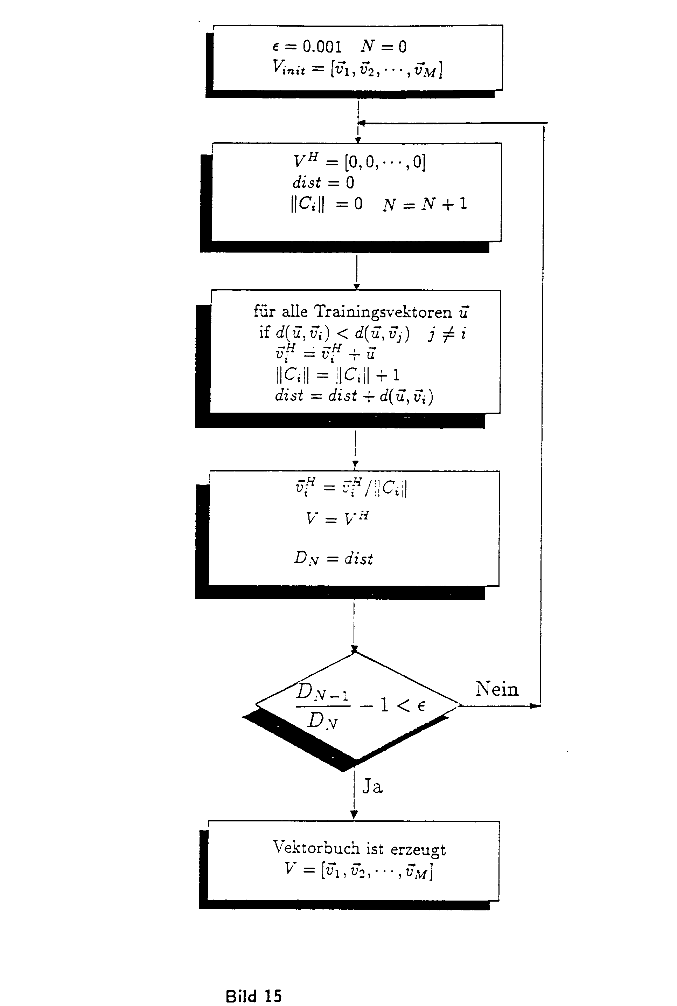

Für jeden Vektor $u_j = (u_{xj}, u_{yj})$ in der Trainingssequenz wird der kleinste Fehler zwischen diesem Vektor und den Vektoren $v_i = v_{xi}, v_{yi}$ in dem vorläufigen Vektorbuch berechnet. Alle Vektoren, die einem Ausgangsvektor $v_i = (v_{xi}, v_{yi})$ des vorläufigen Vektorbuches (beim ersten Durchlauf = Initialvektorbuch) zugewiesen sind, bilden sich ein sogenanntes "Cluster". Die neuen Vektorbuchvektoren sind dann die Mittelwerte der neu erzeugten Gruppen. Wenn der aus den kleinsten mittleren quadratischen Fehlern berechnete Abbruchparameter größer als eine vorher festgelegte Schwelle ist, wird der Algorithmus wiederholt. Dies geschieht solange, bis das optimale Vektorbuch erzeugt worden ist. Im Bild 15 wird das Flußdiagramm der ersten Methode gezeigt. Erst wird ein Initialvektorbuch $V_{init}$ und der Wert des Abbruchsparameters $\varepsilon$ gewählt. In der ersten Stufe des Algorithmus werden eine Hilfstabelle $V^H$, das Fehlermaß $D_N$ und die Anzahl der Trainingswerte im Cluster i $C_i$ initialisiert. Dann werden die Trainingswerte in Cluster eingeteilt und Fehlerberechnungen durchgeführt. In der dritten Stufe des Schleifendurchlaufes werden die Schwerpunkte der Cluster berechnet und ein vorläufiges Vektorbuch erzeugt. Wenn der Fehler $D_N$ im Vergleich zu dem Fehler $D_{N-1}$ aus dem aus dem vorhergehenden Schleifendurchlauf die Abbruchbedingung erreicht, ist das Vektorbuch erzeugt.

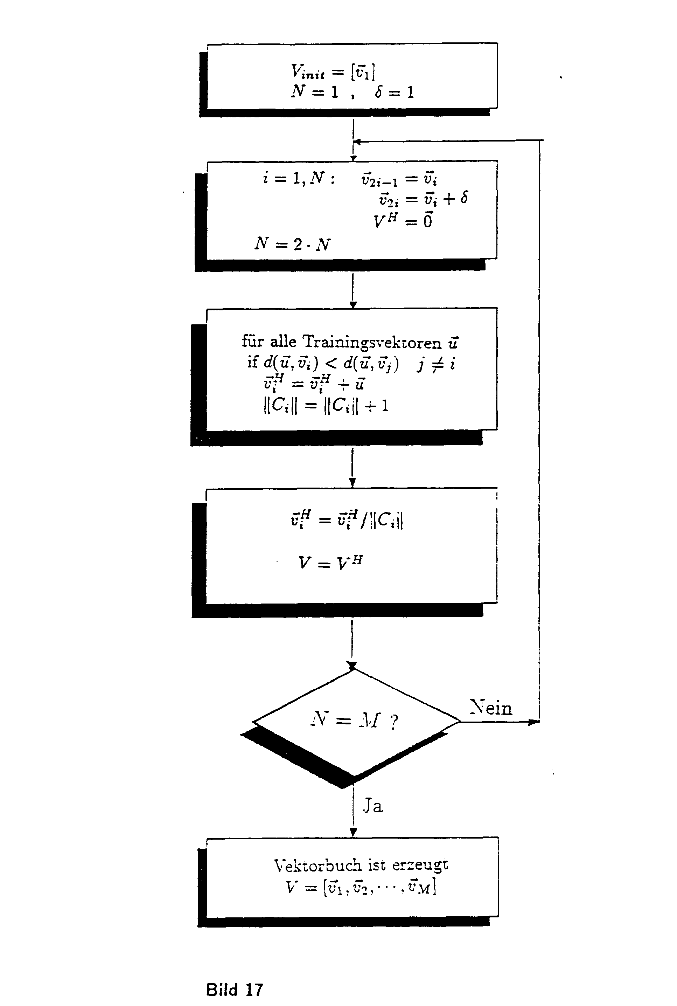

Methode 2: Anstatt mit einem großen Initialvektorbuch anzufangen, kann man erfindungsgemäß mit nur einem Vektor im Initialbuch starten. Dieser Algorithmus erzeugt jedes Mal wenn die Schleife durchgelaufen wird, zwei neue Ersatzvektoren aus jedem Ersatzvektor des Vektorbuches aus dem vorhergehenden Schleifendurchlauf, Bild 16. Diese Methode findet also immer $2^N$ Ersatzvektoren, wobei N die Zahl der Iterationen ist. Das Flußdiagramm, das diese Methode beschreibt, ist in Bild 17 gezeigt. Zuerst wird der Schwerpunkt aller Trainingsvektoren gefunden $V_{init} = [v_1]$. Anschließend werden zwei vorläufige Ersatzvektoren

$$- \vec{v}_{2i-1} \text{ und } \vec{v}_{2i} -$$

durch eine kleine Verschiebung $\delta$ des Schwerpunktes erzeugt. Die Hilfstabelle $V^H$ wird initialisiert. Durch Fehlermaßberechnungen $d(\cdot)$ können das Suchgebiet geteilt und neue Schwerpunkte gefunden werden. Die Trainingsvektoren werden in Clusters eingeteilt und der Hilfstabelle zuaddiert. In der nächsten Stufe werden dann die Schwerpunkte der Clusters berechnet. Der Algorithmus wird solange wiederholt, bis man die korrekte Anzahl von Ersatzvektoren erzeugt hat, N = M.

Um die Ergebnisse mit den vorherigen Ergebnissen bei empirischer Wahl der Suchpositionen vergleichen zu können, wurde auch hier die Bildsequenz "Miss America" verwendet. Auch hier sind die maximale Verschiebung ± 11 Pixel und die Blockgröße ± 16 Pixel. Das dynamische Vektorquantisierungsverfahren zur Bewegungsschätzung wurde auch auf Halb-Pel-Genauigkeit erweitert. Zuerst wird Bewegungsschätzung mit Pel-Genauigkeit durchgeführt. Wie bei der hierarchischen, modifizierten vollen Suche wird in der zweiten Stufe ein Halb-Pel-Suchbereich von ± 3 Bildpunkten um das vorher gefunden Fehlerminimum verwendet.

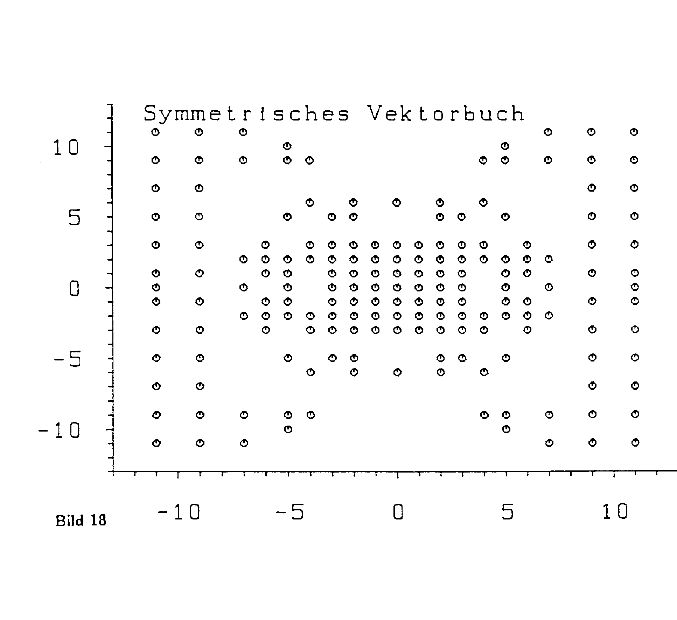

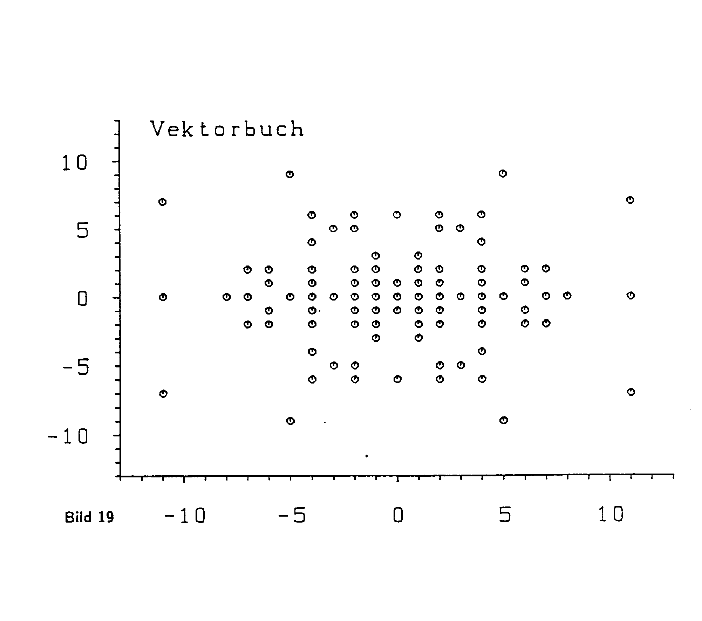

Um einen fairen Vergleich der beiden Verfahren, dynamische Vektorquantisierung und modifizierte volle Suche zu ermöglichen, wurde in beiden Fällen die gleiche Anzahl von Ersatzvektoren verwendet (=177). Das mit Methode 1 erzeugte Vektorbuch ist in Bild 18 dargestellt.Für eine geringere Anzahl von 89 Bewegungsvektoren erhält man das in Bild 19 gezeigt Vektorbuch.

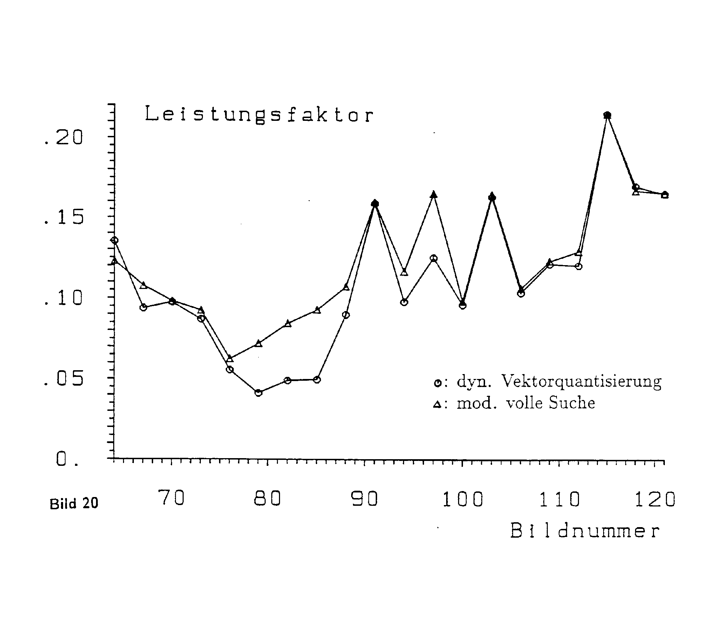

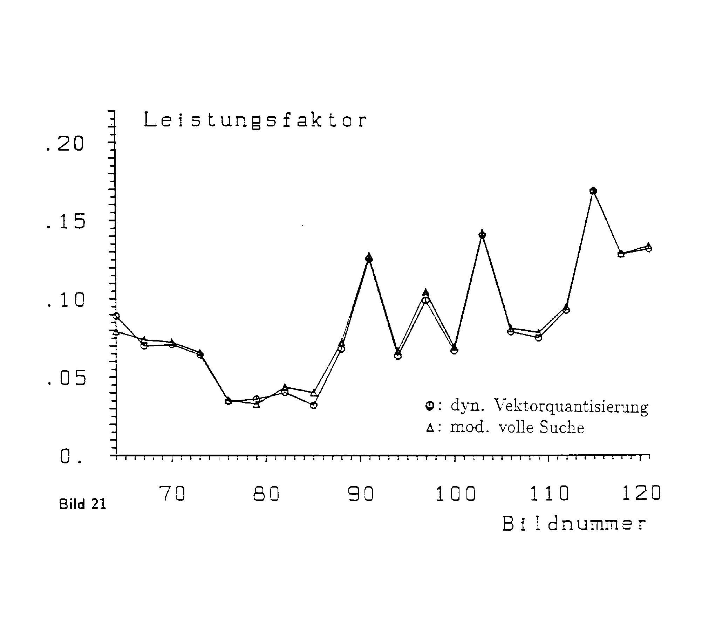

Die Leistungskurven für die zwei Verfahren, dynamische Vektorquantisierung und modifizierte volle Suche - mit Pel- und Halb-Pel-Suche werden in Bild 20 und Bild 21 gezeigt. Man erkennt, daß durch die Optimierung der Verteilung der Suchpositionen bei gleichem Rechenaufwand bessere Ergebnisse erzielt werden können. Für die Suche mit Pel-Genauigkeit ist dabei die Verbesserung erheblich. Bei der Halb-Pel-Suche ist der Unterschied zwischen den beiden Methoden nicht sehr groß, da schon die modifizierte volle Suche mit empirischer Wahl der Suchpositionen dem Optimum der vollen Suche sehr nahe kommt. Insgesamt kann durch die Anwendung des Verfahrens besonders im Hinblick auf die Möglichkeit der Optimierung der Suchposition adaptiv zur gerade verarbeiteten Sequenz einen erhebliche Leistungssteigerung im Vergleich zu anderen schnellen Suchverfahren erzielt werden.

**Patentansprüche**

1. Verfahren zur Bestimmung von Bewegungsvektoren, insbesondere für die codierte Übertragung von Bildsequenzen, unter Verwendung einer Codierung mit Bewegungskompensation, bei der die einzelnen Bilder der Sequenz in gleichgroße Teilbildbereiche (Bildblöcke) ($b_i$) unterteilt sind und jeder Bildblock des aktuellen Bildes mit einer Anzahl gleichgroßer Bildblöcke an verschiedenen Positionen im vorangegangenen Bild verglichen wird, wobei jedem Eingangsbildblock ($b_i$) ein Bewegungvektor ($v_i$) derart zugeordnet wird, daß der Bewegungsvektor die relative Position des Eingangsbildblockes ($b_i$) zu demjenigen Bildblock der vorangegangenen Bildes angibt, der die größte Ähnlichkeit mit dem Eingangsbildblock ($b_i$) aufweist, wobei zur Feststellung der Ähnlichkeit ein Fehlerkriterium benutzt wird, welches beispielsweise durch die Summe der absoluten Differenzen der Bildpunkte beider Bildblöcke gebildet wird und die größte Ähnlichkeit durch Auffinden des Minimums des Fehlerkriteriums festgestellt wird, welches für jede Verschiebung der Position des vorgegangenen Bildes relativ zu der Position des gleichgroßen Bildblockes ($b_i$) des aktuellen Bildes berechnet wird, dadurch gekennzeichnet, daß aus der unendlichen Anzahl möglicher Verschiebungen (v) der beiden Bildblöcke gegeneinander eine endliche Anzahl von Verschiebungen, die im folgenden als Suchpositionen bezeichnet werden, ausgewählt wird , daß für jede dieser Suchpositionen das Fehlerkriterium (E) berechnet wird, daß die Verschiebung, welche die größte Ähnlichkeit der beiden Bildblöcke ergibt, ausgedrückt durch das absolute Minimum des Fehlerkriteriums (E), als Bewegungsvektor ($v_i$) dem Eingangsbildblock ($b_i$) zugeordnet wird, daß die Auswahl der Suchpositionen aus der unendlichen Menge aller möglichen Suchpostionen dabei derart vorgenommen wird, daß in der Umgebung der Nullposition - aktueller Teilbildbereich in Deckung mit entsprechendem Teilbildbereich des vorgegangenen Bildes - eine bildpunktgenaue Suche stattfindet und mit zunehmendem Abstand von der Nullposition ein gröberes Suchraster mit geringerer Auflösung gewählt wird, so daß der als Ergebnis der Minimumsuche des Fehlerkriteriums über der endlichen Anzahl von Suchpositionen erhaltene Bewegungsvektor ($v_i$) möglichst exakt mit dem Ergebnis einer theoretischen Minimumsuche des Fehlerkriteriums über der unendlichen Anzahl aller möglichen Suchpositionen übereinstimmt.

2. Verfahren nach Anspruch 1, dadurch gekennzeichnet, daß die Auswahl der Suchpositionen an Hand von Bildtestsequenzen einmalig vor der Aufnahme einer Bildübertragung in einer Trainingsphase erfolgt und diese Suchpositionen für die Codierung aller Bildsequenzen während der Bildübertragung Verwendung finden.

3. Verfahren nach Anspruch 1, dadurch gekennzeichnet, daß die Auswahl der Suchpositionen, ausgehend von dem Satz von Suchpositionen, der von der Aufnahme der Bildübertragung an Hand von Bildtestsequenzen in der Trainingsphase ermittelt wurde, während der Bildübertragung ständig verändert wird, um eine Adaptivität in Bezug auf die aktuell zu verarbeitenden Bilddaten zu erreichen.

4. Verfahren nach Anspruch 2 oder 3, dadurch gekennzeichnet, daß solche Suchpositionen, die in der Trainingsphase ermittelt wurden, aber bei der augenblicklichen Bildsequenz keine Verwendung finden, da die zu der Suchposition korrespondierende Verschiebung keine Ähnlichkeit der beiden Bildblöcke aufeinanderfolgender Bilder ergibt, durch solche Suchpositionen ersetzt werden, die zur Erzielung eben dieser Ähnlichkeit besser geeignet sind.

5. Verfahren nach Anspruch 1, dadurch gekennzeichnet, daß die Suche des Bewegungsvektors ($v_i$), welcher diejenige Position eines Bildblockes des vorangegangenen Bildes relativ zur Position des Bildblockes des aktuellen Bildes angibt, die eine maximale Ähnlichkeit beider Bildblöcke ergibt, in mehreren Stufen erfolgt, und zwar derart, daß die Genauigkeit des Bewegungsvektors in jeder Stufe verbessert wird, indem das Ergebnis der vorangegangenen Stufe als Ausgangspunkt für weitere Suchpositionen verwendet wird, die sich durch einen geringeren örtlichen Abstand als diejenigen der vorangegangenen Stufe auszeichnen.

6. Verfahren nach Anspruch 1 oder 5, dadurch gekennzeichnet, daß ein Suchbereich definiert wird, der die maximale Verschiebung der Bildblöcke des vorangegangenen Bildes relativ zu Bildblöcken des aktuellen Bildes begrenzt und daher nur Suchpositionen innerhalb dieses Suchbereiches bestimmt zu werden brauchen und daß die örtliche Ausdehnung des Suchbereiches bei Verwendung mehrerer Suchstufen mit jeder Stufe geringer gewählt wird, wodurch die Gesamtzahl aller Suchpositionen aller Stufen und damit die Anzahl der zur Bestimmung des Verschiebungsvektors nötigen Schritte erheblich geringer ist als bei Verwendung nur einer Stufe bei gleicher Endgenauigkeit der Verschiebungsvektoren.

7. Verfahren nach Anspruch 2 oder 3, dadurch gekennzeichnet, daß die Bestimmung der Suchpositionen derart erfolgt, daß ausgehend von einer einzigen Suchposition in einem Trainingsverfahren solange eine Aufspaltung der Suchposition(en) in jeweils zwei neue bessere Suchpositionen erfolgt, bis eine gewünschte Anzahl von Suchpositionen erzielt wurde, wobei unter besseren Suchpositionen solche zu verstehen sind, die bei der in der Trainingsphase verwendeten Bildsequenz zu im Mittel größerer Ähnlichkeit der beiden Bildblöcke führen.

8. Verfahren nach Anspruch 2 oder 3, dadurch gekennzeichnet, daß die Bestimmung der Suchpositionen derart erfolgt, daß, ausgehend von einem Satz von a priori Suchpositionen, durch ein Trainingsverfahren an Hand einer Bildtestsequenz solange eine Modifikation der vorgegebenen Suchpositionen vorgenommen wird, bis die Ähnlichkeit der Bildblöcke der Bildtestsequenz bei Verwendung der geänderten Suchpositionen ein Maximum erreicht.

9. Anwendung des Verfahrens nach einem der Ansprüche 1 bis 8 in einem Bildcodierer für Bildübertragungszwecke.

## Claims

1. Method for determining movement vectors, in particular for coded transmission of image sequences, using a coding with movement compensation, in which the individual images of the sequence are subdivided into component image regions (image blocks) ($b_i$) of equal size and each image block of the current image is compared with a number of image blocks of equal size at different positions in the preceding image, each input image block ($b_i$) being assigned a movement vector ($v_i$) in such a way that the movement vector specifies the relative position of the input image block ($b_i$) with respect to that image block of the preceding image which has the greatest similarity to the input image block ($b_i$), use being made for the purpose of establishing the similarity of an error criterion which is formed, for example, by the sum of the absolute differences between the image points of the two image blocks, and the greatest similarity being established by finding the minimum of the error criterion, which is calculated for each displacement of the position of the preceding image relative to the position of the image block ($b_i$), of the same size, of the current image, characterized in that a finite number of displacements, which are denoted below as search positions, are selected from the infinite number of possible displacements (v) of the two image blocks with respect to one another, in that the image criterion (E) is calculated for each of these search positions, in that the displacement which produces the greatest similarity between the two image blocks, expressed by the absolute minimum of the error criterion (E), is assigned as movement vector ($v_i$) to the input image block ($b_i$), and in that the selection of the search positions from the infinite set of all possible search positions is undertaken in this case in such a way that in the environment of the zero position - current component image region congruent with corresponding component image region of the preceding image - a pixel-accurate search is performed and with increasing distance from the zero position a coarser search matrix of lower resolution is selected, with the result that the movement vector ($v_i$) obtained as the result of the search for the minimum of the error criterion over the finite number of search positions corresponds as exactly as possible with the result of a theoretical search for the minimum of the error criterion over the infinite number of all possible search positions.

2. Method according to Claim 1, characterized in that the selection of the search positions is performed once with the aid of image test sequences before the start of an image transmission in a training phase, and these search positions are used for coding all the image sequences during image transmission.

3. Method according to Claim 1, characterized in that starting from the set of search positions which was determined before the start of image transmission with the aid of image test sequences in the training phase, the selection of the search positions is continuously varied during image transmission in order to achieve adaptivity with respect to the image data currently to be processed.

4. Method according to Claim 2 or 3, characterized in that such search positions as are determined in the training phase but are not used in the instantaneous image sequence since the displacement corresponding to the search position yields no similarity between the two image blocks of successive images are replaced by such search positions as are better suited to achieving just this similarity.

5. Method according to Claim 1, characterized in that the search for the movement vector ($v_i$) which specifies that position of an image block of the preceding image relative to the position of the image block of the current image which yields a maximum similarity of the two image blocks is performed in a plurality of stages, specifically in such a way that the accuracy of the movement vector is improved in each stage by using the result of the preceding stage as starting point for further search positions which are distinguished by a smaller spatial separation than those of the preceding stage.

6. Method according to Claim 1 or 5, characterized in that a search region is defined which limits the maximum displacement of the image blocks of the preceding image relative to image blocks of the current image, as a result of which only search positions inside this search region need to be determined, and in that the spatial extent of the search region in the case of the use of a plurality of search stages is selected to be smaller with each stage, as a result of which the total number of all the search positions of all the stages, and thus the number of the steps required to determine the displacement vector, is substantially smaller than in the case of the use of only one stage in conjunction with the same final accuracy of the displacement vectors.

7. Method according to Claim 2 or 3, characterized in that the determination of the search positions is performed in such a way that, starting from a single search position, the search position(s) is/are split into respectively two new better search positions in a training method until a desired number of search positions has been achieved, better search positions being taken to mean such positions as lead in the case of the image sequence used in the training phase to a higher average similarity between the two image blocks.

8. Method according to Claim 2 or 3, characterized in that the determination of the search positions is performed in such a way that, starting from a set of a priori search positions, modification of the prescribed search positions is undertaken by means of a training method with the aid of an image test sequence until the similarity between the image blocks of the image test sequence has reached a maximum in the case of the use of the changed search positions.

9. Application of the method according to one of Claims 1 to 8 in an image coder for image transmission purposes.

## Revendications

1. Procédé pour déterminer des vecteurs de mouvement, notamment pour la transmission codée de séquences d'image utilisant un codage avec compensation du mouvement, selon lesquelles différentes images de la séquence sont subdivisées en des zones de partie d'image de mêmes dimensions (bloc-image) ($b_i$) et chaque bloc-image de l'image actuelle est comparé à un nombre de blocs-image de mêmes dimensions dans des positions différentes de l'image précédente, et à chaque bloc-image d'entrée ($b_i$) on associe un vecteur de mouvement ($v_i$) de façon que le vecteur de mouvement indique la position relative du bloc-image d'entrée ($b_i$) par rapport au bloc-image appartenant à l'image précédente, qui présente la plus grande similitude avec le bloc-image d'entrée ($b_i$), et pour fixer l'analogie on utilise un critère d'erreur formé par exemple par la somme des différences absolues des points-image des deux blocs-image et on détermine la plus grande analogie en cherchant le minimum du critère d'erreur qui a été calculé pour chaque décalage de la position de l'image précédente par rapport à la position du bloc-image de mêmes dimensions ($b_i$) de l'image actuelle, caractérisé en ce qu'à partir du nombre infini de décalages possibles ($v$) des deux blocs-image l'un par rapport à l'autre, on sélectionne un nombre fini de décalage appelé ci-après position de recherche et, pour chacune de ces positions de recherche, on calcule le critère d'erreur ($E$), on associe le décalage qui correspond à la plus grande analogie des deux blocs-image, exprimée sous la forme du minimum absolu du critère d'erreur ($E$), comme vecteur de mouvement ($v_i$) pour le bloc-image d'entrée ($b_i$), on effectue la sélection des positions de recherche à partir de la quantité infinie de toutes les positions de recherche possibles de façon que, dans l'environnement de la position zéro (zone de partie d'image actuelle en concordance avec la zone d'image partielle correspondante de l'image précédente), on effectue une recherche précise des points-image et, à mesure que la distance augmente par rapport à la position zéro, on choisit une trame de recherche plus grossière avec une résolution moindre pour que le vecteur de mouvement ($v_i$) résultant de la recherche du minimum du critère d'erreur parmi le nombre fini de positions de recherche, corresponde aussi exactement que possible au résultat d'une recherche théorique de minimum du critère d'erreur dans le nombre infini de toutes les positions de recherche possibles.

2. Procédé selon la revendication 1, caractérisé en ce que la sélection des positions de recherche se fait à l'aide de séquences de test d'image, une seule fois avant d'effectuer une transmission d'image dans une phase d'entraînement, et ces positions de recherche sont utilisées pour le codage de toutes les séquences d'image pendant la transmission de l'image.

3. Procédé selon la revendication 1, caractérisé en ce que la sélection des positions de recherche en partant du jeu des positions de recherche déterminé au moment de la transmission d'image à l'aide des séquences de test d'image dans la phase d'entraînement, est modifiée en permanence pendant la transmission de l'image pour arriver à une adaptation par rapport aux données d'image actuelle à traiter.

4. Procédé selon la revendication 2 ou 3, caractérisé en ce que les positions de recherche qui ont été déterminées au cours de la phase d'entraînement mais ne sont pas utilisées pour la séquence d'image instantanée, car le décalage correspondant à la position de recherche ne donne pas de similitude pour les deux blocs-image appartenant à des images successives, sont remplacées par des positions de recherche qui conviennent mieux pour cette similitude.

5. Procédé selon la revendication 1, caractérisé en ce que la recherche du vecteur de mouvement ($v_i$) qui indique la position d'un bloc-image de l'image précédente par rapport à la position du bloc-image de l'image actuelle, donnant une similitude maximale des deux blocs-image, se fait en plusieurs étapes et cela de façon à améliorer la précision du vecteur de mouvement dans chaque étape, et en ce que l'on utilise le résultat de l'étape précédente comme point de départ pour d'autres positions de recherche qui se caractérisent par une distance plus faible que celle de l'étape précédente.

6. Procédé selon la revendication 1 ou 5, caractérisé en ce qu'on définit une plage de recherche qui limite le décalage maximum des blocs-image appartenant à l'image précédente par rapport au bloc-image de l'image actuelle, de sorte qu'il suffit de déterminer seulement les positions de recherche à l'intérieur de cette plage de recherche, et on choisit l'extension locale du domaine de recherche en utilisant plusieurs étapes de recherche plus petites à chaque étape, si bien que le nombre total de toutes les positions de recherche de toutes les étapes, et ainsi le nombre des étapes nécessaires pour déterminer le vecteur de décalage, est plus faible que si l'on n'utilisait qu'une seule étape pour une même précision finale des vecteurs de décalage.

7. Procédé selon la revendication 2 ou 3, caractérisé en ce qu'on détermine les positions de recherche en partant d'une seule position de recherche, par un procédé d'entraînement, jusqu'à ce qu'une division de la ou des positions de recherche se fasse en chaque fois deux nouvelles positions de recherche, meilleures, jusqu'à arriver à un nombre souhaité de positions de recherche, l'expression « meilleures positions de recherche » concernant celles qui, pour la séquence d'image utilisée dans la phase d'entraînement, conduisent en moyenne à une plus grande similitude entre les deux blocs.

8. Procédé selon la revendication 2 ou 3, caractérisé en ce qu'on détermine les positions de recherche en partant d'un jeu de positions de recherche a priori, en effectuant par un procédé d'entraînement, à l'aide d'une séquence de test d'image, une modification des positions de recherche précédentes jusqu'à ce que la similitude des blocs-image de la séquence de test d'image, atteigne un maximum à l'utilisation des positions de recherche modifiées.

9. Application du procédé selon l'une des revendications 1 à 8 à un codeur d'image pour la transmission d'images.

Bild 1

Bild 2

Bild 3

**Bild 4**

**Bild 5**

15

Hierarchische Suche

**Bild 6**

Bild 7

Bild 8

Bild 9

Rechenaufwand    Halb-Pel-Genauigkeit
× volle Suche

1000

800

600

400

200

+ mod. volle Suche
△ 2D-logarithmic                    Three-step
0

.05            .10              .15            .20

**Bild 10**                    Leistungsfaktor

Bild N+3

Bild N

$\omega$

$B_\omega$

$B_\omega$

$d_{min}$

$v_i$

$B_{\omega+v_i}$

$v_i$ : Element im Vektorbuch
$B_{\omega+v_i}$: Verschobener Block

**Bild 11**

$S_{N+3}$

$S_N$

3T

DVQ

$\hat{S}_{N+3}$

Vektorbuch

$[v_1, v_2, \cdots, v_N]$

**Bild 12**

o : Suchpositionen

Bild 13

x : Trainingswerte
o : Schwerpunkte

Bild 14

Bild 16

$$\epsilon = 0.001 \quad N = 0$$
$$V_{init} = [\vec{v}_1, \vec{v}_2, \cdots, \vec{v}_M]$$

$$V^H = [0, 0, \cdots, 0]$$
$$dist = 0$$
$$\|C_i\| = 0 \quad N = N + 1$$

für alle Trainingsvektoren $\vec{u}$
$$\text{if } d(\vec{u}, \vec{v}_i) < d(\vec{u}, \vec{v}_j) \quad j \neq i$$
$$\vec{v}_i^H = \vec{v}_i^H + \vec{u}$$
$$\|C_i\| = \|C_i\| + 1$$
$$dist = dist + d(\vec{u}, \vec{v}_i)$$

$$\vec{v}_i^H = \vec{v}_i^H / \|C_i\|$$
$$V = V^H$$
$$D_N = dist$$

$$\frac{D_{N-1}}{D_N} - 1 < \epsilon$$

Nein

Ja

Vektorbuch ist erzeugt
$$V = [\vec{v}_1, \vec{v}_2, \cdots, \vec{v}_M]$$

**Bild 15**

$$V_{init} = [\vec{v}_1]$$
$$N = 1 \quad , \quad \delta = 1$$

$$i = 1, N: \quad \vec{v}_{2i-1} = \vec{v}_i$$
$$\vec{v}_{2i} = \vec{v}_i + \delta$$
$$V^H = \vec{0}$$
$$N = 2 \cdot N$$

für alle Trainingsvektoren $\vec{u}$
if $d(\vec{u}, \vec{v}_i) < d(\vec{u}, \vec{v}_j) \quad j \neq i$
$$\vec{v}_i^H = \vec{v}_i^H + \vec{u}$$
$$\|C_i\| = \|C_i\| + 1$$

$$\vec{v}_i^H = \vec{v}_i^H / \|C_i\|$$
$$V = V^H$$

$$N = M \ ?$$

Nein

Ja

Vektorbuch ist erzeugt
$$V = [\vec{v}_1, \vec{v}_2, \cdots, \vec{v}_M]$$

**Bild 17**

Symmetrisches Vektorbuch

Bild 18

Bild 19

Bild 20

Bild 21